# EUROPEAN PATENT SPECIFICATION

(11) **EP 0 827 885 B1**
(45) Date of publication and mention of the grant of the patent: **31.10.2001**
(21) Application number: 97113532.2
(22) Date of filing: 06.08.1997
(51) Int. Cl.: B60T 7/06, B60R 21/09

(54) **A system for releasing the brake pedal in the event of a collision**
Anordnung für Auslösung des Bremspedals im Falle einer Kollision
Système de dégagement d'une pédale de freinage en cas de collision

(30) Priority: 10.09.1996 IT TO960739
(43) Date of publication of application: 11.03.1998
(73) Proprietor: S.I.V. S.p.A., 10040 Volvera (Torino) (IT)
(72) Inventor: Campione, Gaetano, 10040 Volvera (TO) (IT); Cavaglia', Renato, 10040 Volvera (TO) (IT)
(74) Representative: Lotti, Giorgio

(56) References cited:
- DE-A- 3 533 420
- DE-A- 4 409 235
- DE-A- 4 409 324

## Description

### Field of the invention

The present invention refers to a system for releasing the brake pedal in the event of a collision so as to prevent the driver's foot and ankles from damage when the vehicle is in a collision.

### Background of the invention

It has been recently found that in the event of road accidents, particularly frontal collisions, there is an extremely high number of damages caused by the brake pedal. In a collision, the driver's legs, particularly the ankles, are likely to be injured because of the brake pedal that cannot be fully pressed down due to the contrasting action exerted by the servo brake control rod. Therefore, the brake pedal can be regarded as a rigid element dangerously protruding from the pedals zone towards the driver's legs.

A few safety systems have been proposed with the aim of reducing the risk of such damages.

DE-A-43 05 290 discloses a safety system in which the brake pedal is mounted by means of a linked structure that, in the event of a collision, springs back to raise the pedal clear of the foot region.

DE-A-44 09 235 discloses a system wherein the pedal is pivotally mounted on a front bulkhead panel bracket. The top end of the pedal is pinned to a compound linkage coupled to a main cross member. In the event of a collision, the bulkhead frame collapses and displaces the pedal clear of the driver's foot.

DE-A-44 09 324 discloses a cable and pulley system that raises the pedal in the event of a collision.

EP-A-0 659 615 relates to a system in which the brake pedal is supported by two pins respectively secured to a pair of collapsible half-shells. Following a collision, the half-shells collapse and let the pins come off, releasing the pedal and letting it fall down.

### Summary of the invention

It is an object of the present invention to provide an alternative system allowing for the brake pedal to be released in a safe and efficient manner, the system being of simple construction and small overall size.

In accordance with the present invention, this object is accomplished by the provision of a system for releasing the brake pedal in the event of a collision, wich presents the characteristics of claim 1.

### Brief description of the drawings

In order that the present invention may be well understood there will now be described a preferred embodiment thereof, given by way of example, reference being made to the accompanying drawings, in which:
FIG. 1 is a longitudinal cross sectional view of the safety system in accordance with the present invention, in a first normal operation condition, the brake pedal being hooked;
FIG. 2 is a longitudinal cross sectional view of the safety system of FIG. 1, the brake pedal being released following a crash; and
FIGS. 3, 4 and 5 are cross sectional views taken along the lines III-III, IV-IV, and V-V, respectively, of FIG. 1.

### Detailed description of a preferred embodiment

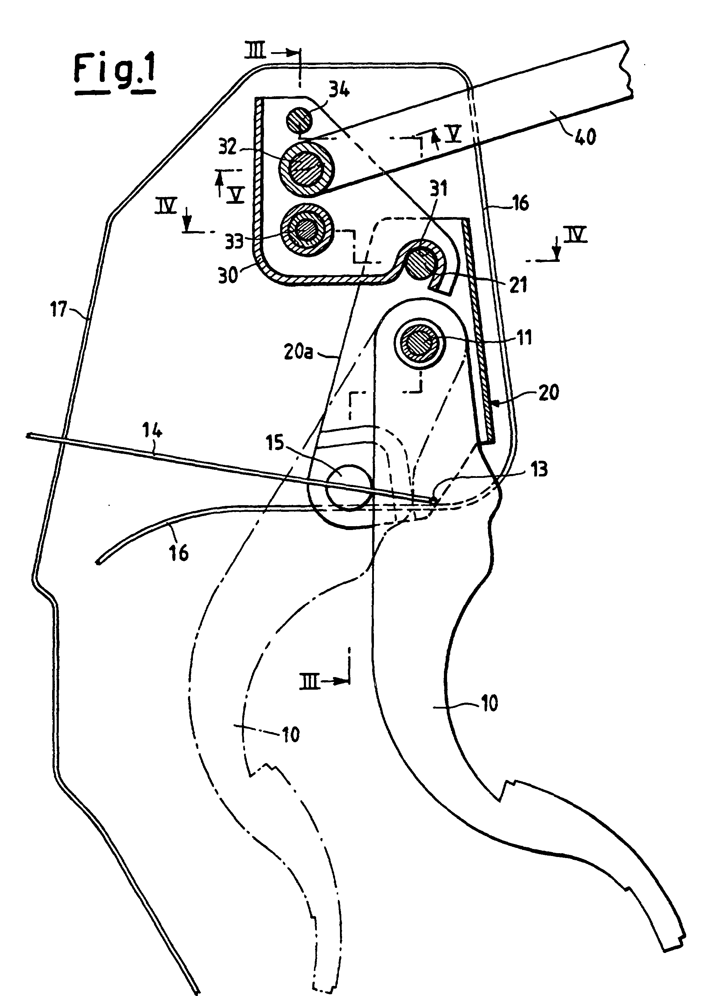

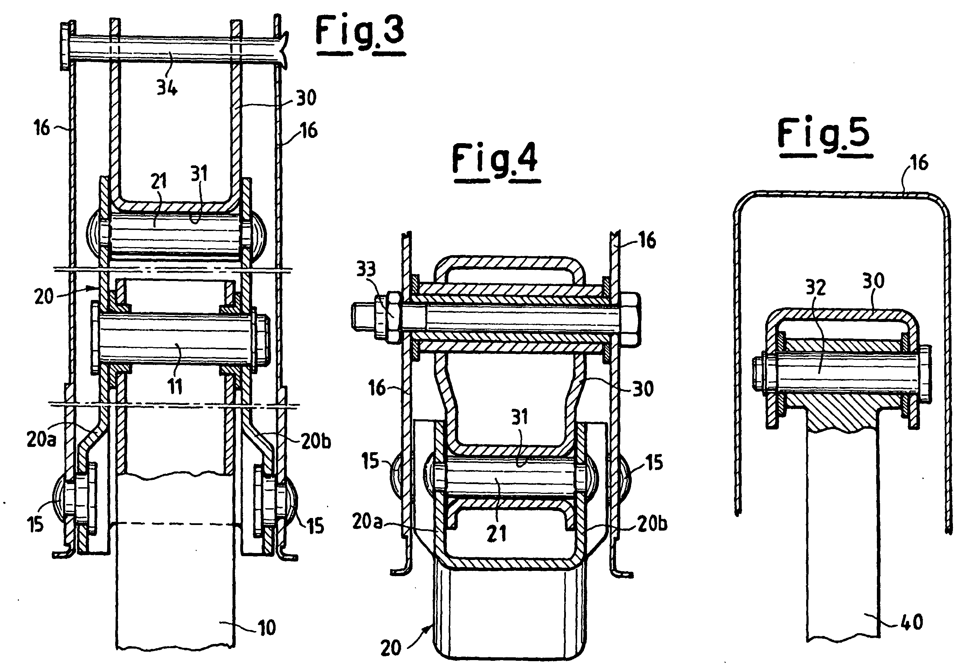

With reference initially to FIG. 1, in accordance with the present invention the brake pedal 10 is not directly connected to a conventional pedals support but is hinged at 11 to a bracket 20 having vertical walls 20a, 20b located at either side of the pedal. The pedal is secured in known manner at 13 to a servo brake control rod schematically designated by reference numeral 14. The lower part of the bracket 20 is hinged at 15 to a support 16 integral with the front body frame 17. The bracket is kept in its normal operation position of FIG. 1 by a hook member 30 engaging the upper part of the bracket 20. As also shown in FIG. 4, the hook 30 forms a pair of rear recesses 31 (on the left and right sides of the pedal), in which there is engaged a pin 21 integral with the bracket 20.

Referring to FIGS. 1 and 5, still in accordance with the present invention the body of hook 30 is pivotally mounted at 32 to the steering column 40 which constitutes, as well known, a considerably rigid member of the vehicle. The position of the pivotal connection 32 can therefore be considered as a fixed point also in the event of a collision. The hook 30 is furthermore secured to the support 16, for example by means of a bolt, at a point 33 located below the point 32 of pivotal connection to the steering column 40.

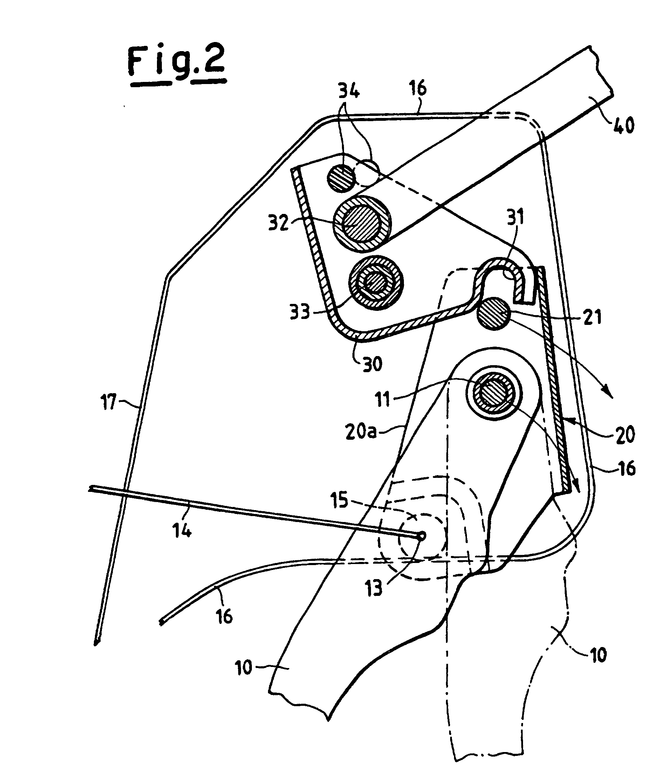

Operation of the safety system is as follows. In the event of a frontal collision, the front body frame 17 with the support 16 and the parts mounted thereto are forced backwards (to the right in FIGS. 1 and 2). The rearward movement is transmitted from the support 16 to the hook 30 through pivotal connection 33. However, owing to the contrasting action of the substantially undeformable steering column 40, the pivotal connection 32 becomes a centre of rotation around which the hook 30 rotates (in the counter-clockwise direction looking at FIGS. 1 and 2) so as to lift its own rear end recess 31 and release the pin 21. In this condition, the bracket 20 is free to rotate downwards (in the clockwise direction in FIGS. 1 and 2) about the hinge 15 due to the torque the bracket receives from the pedal 10 through the pin 11. The pressure exerted by the driver's foot on the pedal rotates the pedal about the point 13 of connection to the servo brake control rod, which becomes a fulcrum point for the pedal. Although it remains hinged to the bracket 20, the pedal encounters no resistance in reaching the front body frame 17 and therefore does no longer represent a possible cause of damage to the foot.

Preferably, in order to improve the release of the bracket 20, the hinge 15 is located at a point on the. support 16 such that when the pedal is pressed down, the restraining point 13 is substantially coincident with the point 15 at which the bracket 20 is hinged to the vehicle. In such a preferred arrangement, the centres of rotation of the bracket and the pedal lie on the same horizontal axis. This prevents the bracket from jamming, which would hinder the pedal's movement.

In the preferred embodiment, as shown in FIGS. 1 and 2, the hook 30 provides a pair of side pins 34, for example of plastic material, which yield when subjected to a load exceeding about 30 kilograms. Side pins 34 serve as further locking means. In the normal operation condition (FIG. 1), side pins 34 are engaged with the support 16 so as to prevent the hook 30 from accidentally rotating during handling and assembling steps. At the instant a frontal collision occurs, the side pins 34 are sheared off, allowing rotation of the hook 30 as discussed above.

As will be apparent, the geometry of the system shown in FIGS. 1 and 2 provides that the hinge point 15 between the bracket and the vehicle body is more advanced with respect to the centre of gravity of the bracket and the pedal. Therefore, once the pin 21 is released from the hook 30, the link unit formed by the bracket and the pedal will tend to fall down due to its own weight.

While a specific embodiment of the invention has been disclosed, it is to be understood that such disclosure has been merely for the purpose of illustration and that the invention is not to be limited in any manner thereby. Various modifications will be apparent to those skilled in the art in view of the foregoing example.

## Claims

1. A system for releasing the brake pedal (10) in the event of a collision, in wich said brake pedal is hinged to a bracket (20) wich is linked to the body (16) of the vehicle **characterized in that** said bracket is hinged (15) to the body (16) with his lower portion and **in that** his upper portion is hooked to a hook member (30) in turn pivotally mounted at a first location (32) to the steering column (40) and hinged at a second location (33) to the vehicle; said hook member (30) having a first, normal operation position in which it keeps the bracket (20) fixed, and a second position, rotated about said first pivotal connection (32) to the steering column (40), with displacement of said second location (33) to the vehicle following a collision, in which said bracket (20) is released from the hook member (30) and is free to rotate about said hinged connection (15) to the vehicle, whereby the brake pedal (10) is free to rotate until it reaches the front body frame (17).

2. A system as claimed in claim 1, **characterised in that** when the brake pedal is pressed down, the pivotal connection (15) of the bracket (20) to the vehicle and the point (13) at which the brake pedal (10) is restrained to the servo brake control rod (14) lie on two respective horizontal, substantially coincident axes.

3. A system as claimed in claim 1, **characterised in that** the bracket (20) is so shaped as to provide vertical walls (20a, 20b) located on either side of the brake pedal (10).

4. A system as claimed in claim 1, **characterised in that** said hook member (30) provides at least one yieldable locking means (34) which yields when subjected to a load exceeding about 30 kilograms, said locking means (34) normally engaging said support (16) and being adapted for collapsing in the event of a frontal collision to allow said rotation of the hook member (30).

## Patentansprüche

1. System zum Freigeben des Bremspedals (10) im Falle eines Zusammenstoßes, wobei das Bremspedal an einem Halteteil (20) angelenkt ist, das mit der Karosserie (16) des Fahrzeuges gelenkig verbunden ist,
**dadurch gekennzeichnet, dass** das Halteteil mit seinem unteren Abschnitt an der Karosserie (16) angelenkt (15) ist und dass sein oberer Abschnitt in ein Hakenelement (30) eingehakt ist, das wiederum an einer ersten Stelle (32) an der Lenksäule (40) schwenkbar angebracht ist und an einer zweiten Stelle (33) an dem Fahrzeug angelenkt ist, wobei das Hakenelement (30) eine erste normale Betriebsstellung einnimmt, in der es das Halteteil (20) fixiert hält, und nach einem Zusammenstoß eine zweite Stellung einnimmt, die unter Verschiebung der zweiten Stelle (33) zu dem Fahrzeug um die erste Schwenkverbindung (32) an der Lenksäule (40) verdreht ist, in der das Halteteil (20) von dem Hakenelement (30) ausgeschwenkt und frei um die Gelenkverbindung (15) mit dem Fahrzeug drehbar ist, wodurch das Bremspedal (10) frei drehbar ist, bis es den vorderen Karosserierahmen (17) erreicht.

2. System nach Anspruch 1,
**dadurch gekennzeichnet, dass** die Schwenkverbindung (15) des Halteteils (20) an dem Fahrzeug und die Stelle (13), an der das Bremspedal (10) an der Servobremse-Steuerstange (14) gehalten ist, auf zwei jeweils horizontalen, im Wesentlichen übereinstimmenden Achsen liegen.

3. System nach Anspruch 1,
**dadurch gekennzeichnet, dass** das Halteteil (20) so geformt ist, dass senkrechte Wände (20a, 20b) vorhanden sind, die auf jeder Seite des Bremspedals (10) liegen.

4. System nach Anspruch 1,
**dadurch gekennzeichnet, dass** das Hakenelement (30) wenigstens ein nachgiebiges Verriegelungsmittel (34) aufweist, das nachgibt, wenn es einer Last von über 30 kg ausgesetzt wird, wobei das Verriegelungsmittel (34) normalerweise mit dem Halteteil (16) in Eingriff ist und dazu angepasst ist, im Falle einer Frontalkollision zu brechen, um die Drehung des Hakenelementes (30) zuzulassen.

## Revendications

1. Système permettant de libérer la pédale de frein (10) dans le cas d'une collision, dans lequel ladite pédale de frein est articulée sur un support (20) qui est relié à la carrosserie (16) du véhicule, **caractérisé en ce que** ledit support est articulé (en 15) par sa partie inférieure à la carrosserie (16), et **en ce que** sa partie supérieure est accrochée à un élément de crochet (30) à son tour monté de façon à pouvoir pivoter par rapport au véhicule en un premier emplacement (32) de la colonne de direction (40) et articulé en un deuxième emplacement (33) ; ledit élément de crochet (30) présentant une première position de fonctionnement normal dans laquelle il maintient le support (20) fixé, et une deuxième position, tournée autour de ladite première liaison pivotante (32) de la colonne de direction (40), avec un déplacement dudit deuxième emplacement (33) par rapport au véhicule, à la suite d'une collision, position dans laquelle ledit support (20) est libéré de l'élément de crochet (30) et peut librement tourner autour de ladite liaison articulée (15) par rapport au véhicule, la pédale de frein (10) pouvant ainsi tourner librement jusqu'à atteindre l'ossature avant (17) de la carrosserie.

2. Système selon la revendication 1, **caractérisé en ce que**, lorsque la pédale de frein est enfoncée, la liaison articulée (15) du support (20) au véhicule et le point (13) auquel la pédale de frein (10) est limitée à la tige de poussée du servofrein (14), se trouvent sur deux axes respectifs horizontaux sensiblement confondus.

3. Système selon la revendication 1, **caractérisé en ce que** le support (20) est conçu de façon à présenter des parois verticales (20a, 20b) qui sont situées de part et d'autre de la pédale de frein (10).

4. Système selon la revendication 1, **caractérisé en ce que** ledit élément de crochet (30) fournit au moins un élément de blocage déformable (34), qui se déforme quand il est soumis à une charge supérieure à environ 30 kilogrammes, ledit moyen de blocage (34) s'engageant normalement avec ladite carosserie (16) et étant conçu pour s'affaisser en cas de collision frontale, afin de permettre ladite rotation de l'élément de crochet (30).
